# EUROPEAN PATENT APPLICATION

(11) **EP 1 826 584 A2**
(43) Date of publication of application: **29.08.2007**
(21) Application number: 07004152.0
(22) Date of filing: 28.02.2007
(51) Int. Cl.: G01S 5/14

(54) **Positioning device, method of controlling positioning device, program for controlling positioning device, and computer-readable recording medium having program for controlling positioning device recorded thereon**

(30) Priority: 28.02.2006 JP 2006052215
(71) Applicant: SEIKO EPSON CORPORATION, Tokyo 160-0811 (JP)
(72) Inventor: Mizuochi, Shunichi, Suwa-shi Nagano-ken 392-8502 (JP); Kurata, Tomoyuki, Suwa-shi Nagano-ken 392-8502 (JP); Muraki, Kiyotaka, Suwa-shi Nagano-ken 392-8502 (JP); Yano, Koichiro, Suwa-shi Nagano-ken 392-8502 (JP)
(74) Representative: HOFFMANN EITLE

(57) **Abstract**

A positioning device includes a position calculation section which calculates a determined position of the positioning de vice based on a satellite signal S1 and the like, a velocity calculation section which calculates moving velocity of the positioning device, a stationary state determination section which determines whether or not a stationary state condition beta is satisfied in which a time elapsed from the last positioning is within an allowable time range specified in advance, moving velocity v0 during the last positioning is within a first velocity allowable range specified in advance, and current moving velocity v1 is within a second velocity allowable range specified in advance, an average position calculation section which calculates an average position Q1 by averaging a determined position P0 during the last positioning and a current determined position P1, and the like.

## Description

### BACKGROUND OF THE INVENTION

The present invention relates to a positioning device using a signal from a positioning satellite and the like.

A positioning system has been utilized which locates the current position of a GPS receiver using a global positioning system (GPS) (satellite navigation system) or the like.

The GPS receiver receives signals from three or more GPS satellites, and calculates the distance between each GPS satellite and the GPS receiver (hereinafter called "pseudo-range") from the difference between the time at which the signal is transmitted from each GPS satellite and the time at which the signal reaches the GPS receiver (hereinafter called "delay time"), or example. The GPS receiver calculates (locates) the current position using satellite; orbital information of each GPS satellite contained in the signal received from each CPS satellite and the pseudo-range.

However, when the signal from the JPS satellite reaches the GPS receiver after being reflected by a building or the like, or the signal strength is weak, or the dilution of precision (DOP) of the GPS satellite in the sky is low, the determined position may significantly differ from the true position, whereby the accuracy of the determined position may deteriorate.

On the other hand, technology has been proposed which calculates the current expected position (hereinafter called "expected position") from the velocity vector and the elapsed time based on the last position, and averages the expected position and the current determined position (e.g. JP-A-8-68651 (e.g. FIG. 5)).

However, the GPS satellite moves in the satellite orbit even when the GPS receiver stands still. Moreover, since the reception state of the satellite signal changes from moment to moment, the velocity indicated by the velocity vector does not necessarily become zero.

According to the above technology when the elapsed time is 10 seconds, the expected position differs from the last position at a distance corresponding to 10 seconds even when the GPS receiver star ds still. As a result, the accuracy of the position after averaging deteriorates, where by the output position differs from the true position.

According to the above technology, when the GPS receiver stands still, the expected position cumulatively differs front the last position as the time elapsed from the last positioning increases, whereby the output position differs from the true position.

### SUMMARY

According to one aspect of the prese nt invention, there is provided a positioning device which locates a position based on a satellite signal which is a signal from a positioning satellite, the positioning device comprising:
a determined position calculation section which calculates a determined position of the positioning device based on the satell: te signal;
a velocity calculation section which calculates moving velocity of the positioning device based on the satellite signal;
an elapsed time evaluation section which determines whether or not time elapsed from last positioning is within an allowable :ime range specified in advance;
a last velocity evaluation section which determines whether or not moving velocity during the last positioning is within a first velocity allowable range specified in advance;
a current velocity evaluation section which determines whether or not current moving velocity is within a second veloc: ty allowable range specified in advance;
a stationary state determination section which determines whether or not a stationary state condition is satisfied in which the time elapsed from the last positioning is within the allowable time range, the noving velocity during the last positioning is within the first velocity allowable range, and the current moving velocity is within the second velocity allowable range;
an average position calculation section which calculates an average position by averaging the determined position during the last positioning and the current determined position when the stationary state determination section has determined that the stationary state condition is satisfied; and
a position output section which outputs the average position.

### BRIEF DESCRIPTION OF THE SEVERAL VIEWS OF THE DRAWING

FIG. 1 is a schematic view shoving a terminal and the like according to one embodiment of the invention.
FIG. 2 is a schematic view showing the major hardware configuration of the terminal.
FIG. 3 is a schematic view showing the major software configuration of the terminal.
FIG. 4 is a view illustrative of an average position calculation program.
FIG. 5 is a schematic flowchart showing an operation example of the terminal.

### DETAILED DESCRIPTI ON OF THE EMBODIMENT

The invention may provide a posi ioning device which can improve the accuracy of the output device during a stationary st ite.

According to one embodiment of the invention, there is provided a positioning device which locates a position based (n a satellite signal which is a signal from a positioning satellite, the positioning device comprising:
a determined position calculation section which calculates a determined position of the positioning device based on the satellite signal;
a velocity calculation section which calculates moving velocity of the positioning device based on the satellite signal;
an elapsed time evaluation section which determines whether or not time elapsed from last positioning is within an allowable time range specified in advance;
a last velocity evaluation section which determines whether or not moving velocity during the last positioning is wit hin a first velocity allowable range specified in advance;
a current velocity evaluation sec :ion which determines whether or not current moving velocity is within a second velocity allowable range specified in advance;
a stationary state determination section which determines whether or not a stationary state condition is satisfied in which the time elapsed from the last positioning is within the allowable time range, the noving velocity during the last positioning is within the first velocity allowable range, and the current moving velocity is within the second velocity allowable range;
an average position calculation section which calculates an average position by averaging the determined position during the last positioning and the current determined position when the stationary state determination section has determined that the stationary state condition is satisfied; and
a position output section which outputs the average position.

Since the positioning device includes the average position calculation section, the positioning device can calculate the average position when the stationary state condition is satisfied. Specifically, the positioning device does not average (correct) the expected position estimated from the last determined position, the last velocity vector, and the elapsed time and the current determined position. The positioning device averages the last determined position and the current determined position when the stationary state condition is satisfied. Therefore, the accuracy of the last velocity vector does not affect the correction of the current determined position.

When the positioning device stands still, the last determined position and the current determined position are indicated by the coordinates near the true position. This means that the true position exists near the last determined position and the current determined position when the positioning device is in a stationary state. On the other hand, the true position does not necessary exist near the expected position.

Therefore, the output position becomes close to the true position in comparison with the case of outputting the position obtained by averaging the expected position and the current determined position by averaging the last determined position and the current determined position and outputting the average position.

This improves the accuracy of the output position during a stationary state.

In the positioning device, the position output section may output the current determined position when the stationary state determination section has determined that the stationary state condition is not satisfied.

This allows the positioning device to directly output the determined position without correcting the determined posit: on when the stationary state condition is not satisfied.

Therefore, the position which reflects the actual moving state can be output when the positioning device is moving. Specifically, the positioning device can improve the followability during movement.

According to another embodimer t of the invention, there is provided a method of controlling a positioning device comprising:
a determined position calculation step of causing the positioning device to calculate a determined position of the positioning device based on a satellite signal which is a signal from a positioning satellite;
an elapsed time evaluation step of causing the positioning device to determine whether or not time elapsed from last positioning is within an allowable time range specified in advance;
a last velocity evaluation step of causing the positioning device to determine whether or not moving velocity during the last positioning is within a first velocity allowable range specified in advance;
a current velocity evaluation step of causing the positioning device to determine whether or not current moving velocity is within a second velocity allowable range specified in advance;
an average position calculation step of causing the positioning device to calculate an average position by averaging the determined position during the last positioning and the current determined position when the positioning device has determined that the time elapsed from the last positioning is within the allowable time range, the moving velocity during the last positioning is within the first velocity allowable range, and the current moving velocity is within the second velocity allowable range; and
a position output step of causing the positioning device to output the average position.

This improves the accuracy of the output position during a stationary state.

According to a further embodime it of the invention, there is provided a program for controlling a positioning device, the program causing a computer to execute:
a determined position calculation step of causing the positioning device to calculate a determined position of the positioning device based on a satellite signal which is a signal from a positioning satel ite;
an elapsed time evaluation step of causing the positioning device to determine whether or not time elapsed from last positioning is within an allowable time range specified in advance;
a last velocity evaluation step of causing the positioning device to determine whether or not moving velocity during the last positioning is within a first velocity allowable range specified in advance;
a current velocity evaluation step of causing the positioning device to determine whether or not current moving velocity is within a second velocity allowable range specified in advance;
an average position calculation step of causing the positioning device to calculate an average position by averaging the determined position during the last positioning and the current determined position when the positioning device has determined that the time elapsed from the last positioning is within the allowable time range, the moving velocity during the last positioning is within the first velocity allowable range, and the current moving velocity is within the second velocity allowable range; and
a position output step of causing the positioning device to output the average position.

According to a still another embodiment of the invention, there is provided a computer-readable recording medium having a program for controlling a positioning device recorded thereon, the program causing a computer to execute:
a determined position calculation step of causing the positioning device to calculate a determined position of the positioning device based on a satellite signal which is a signal from a positioning satellite;
an elapsed time evaluation step c f causing the positioning device to determine whether or not time elapsed from last positioning is within an allowable time range specified in advance;
a last velocity evaluation step of causing the positioning device to determine whether or not moving velocity during the last positioning is within a first velocity allowable range specified in advance;
a current velocity evaluation step of causing the positioning device to determine whether or not current moving velocity is within a second velocity allowable range specified in advance;
an average position calculation step of causing the positioning device to calculate an average position by averaging the determined position during the last positioning and the current determined position when the positioning device has determined that the time elapsed from the last positioning is within the allowable time range, the moving velocity during the last positioning is within the first velocity allowable range, and the current moving velocity is within the second velocity allowable range; and
a position output step of causing the positioning device to output the average position.

Embodiments of the invention are described below in detail with reference to the drawings and the like.

The following embodiments are specific examples of the invention and are provided with various technologically limitations. Note that the scope of the invention is not limited to these aspects unless there is a description which limits the invention.

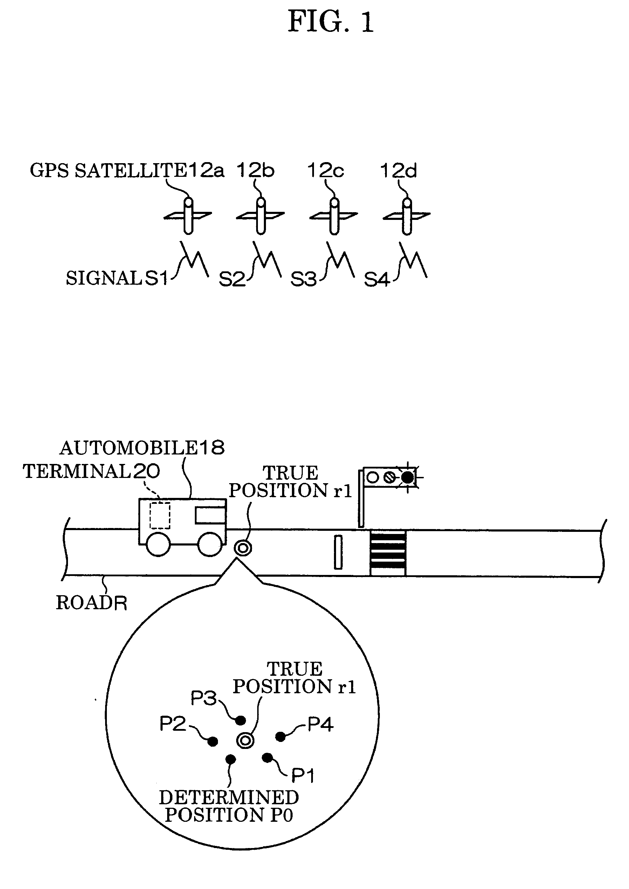

FIG. 1 is a schematic view showing a terminal 20 and the like according to one embodiment of the invention.

As shown in FIG. 1, the terminal 20 is provided in an automobile 18. The terminal 20 can receive signals S1, S2, S3, and S4 from GPS satellites 12a, 12b, 12c, and 12d (positioning satellites), for example. The signal S 1 and the like exemplify a satellite signal. The terminal 20 exemplifies a positioning device.

The automobile 18 is positioned on a road R. Since the traffic signal is a red light, the driver has stopped the automob: le 18 near the stop line in front of the crossing. Therefore, the terminal 20 stands still.

The true position of the terminal 20 is a position r1.

However, since the GPS satellite 2a and the like move in the satellite orbits and the reception state of the signal S1 and the like changes from moment to moment, the determined position also changes from moment to moment. For example, the determined position changes in the order of P0, P1, P2, P3, and P4 with the passage of time. However, since the true position r1 is fixed when the terminal 20 stands still, the determined position P0 and the like are indicated by the coordinates near the true position r1.

When the terminal 20 is in a stationary state, the terminal 20 can ensure the stability of the output position as described below even if the determined position P0 and the like change.

The terminal 20 is a car navigation system which continuously calculates (locates) the position on the road R and displays the acquired position information together with map information, for example.

The terminal 20 may be a portable telephone, a personal handy-phone system (PHS), a personal digital assistance (PDA), or the like instead of a car navigation system. Note that the terminal 20 is not limited thereto.

The number of GPS satellites 12a and the like is not limited to four, and may be three or five or more.

### (Major hardware configuration of terminal 20)

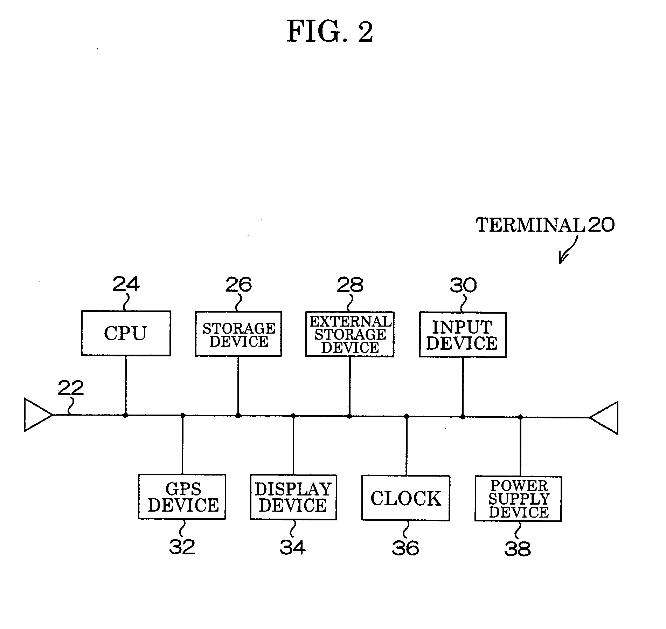

FIG. 2 is a schematic view showing the major hardware configuration of the terminal 20.

As shown in FIG. 2, the terminal 20 includes a computer, and the computer includes a bus 22.

A central processing unit (CPU) 24, a storage device 26, an external storage device 28, and the like are connected with the bus 22. The storage device 26 is a random access memory (RAM), a read only memory (ROM), or the like. The external storage device 28 is a hard disk drive (HDD) or the like.

An input device 30 for inputting various types of information and the like, a GPS device 32 for receiving the signal S1 and the like from the GPS satellite 12a and the like, a display device 34 for displaying various types of information, a clock 36, and a power supply device 38 are also connected with the bus 22.

### (Major software configuration of terminal 20)

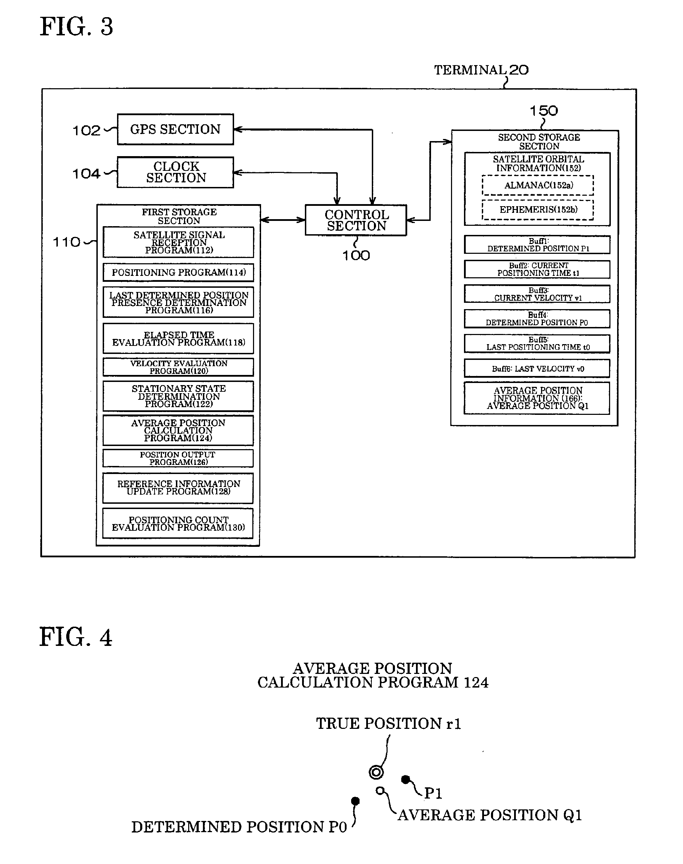

FIG. 3 is a schematic view showing the major software configuration of the terminal 20.

As shown in FIG. 3, the terminal 20 includes a control section 100 which controls each section, a GPS section 102 corresponding to the terminal GPS device 32 shown in FIG. 2, a clock section 104 corresponding to the clock 36, and the like.

The terminal 20 also includes a first storage section 110 which stores various programs and a second storage section 150 which stores various types of information.

As shown in FIG. 3, the terminal 20 stores satellite orbital information 152 in the second storage section 150. The satelli :e orbital information 152 includes an almanac 152a and an ephemeris 152b. The almanac 152a is information indicating the approximate orbits of all the GPS satellites 12a and the like (see FIG. 1) together with the acquisition time. The almanac 152a can be decoded and acquired from the signal S1 and the like from the GPS satellite 12a and the like.

The ephemeris 152b is information indicating the accurate orbit of each GPS satellite 12a and the like (see FIG. 1). For example, in order to acquire the ephemeris 152b of the GPS satellite 12a, it is necessary to receive the signal S1 from the GPS satellite 12a and decode the signal S 1 to ; acquire the ephemeris 152b.

The terminal 20 uses the satellite orbital information 152 for positioning.

As shown in FIG. 3, the termina 20 stores a satellite signal reception program 112 in the first storage section 110. The satellite signal reception program 112 is a program for causing the control section 100 to receive the signal S1 and the like from the GPS satellite 12a and the like.

In more detail, the control section 100 refers to the almanac 152a, determines the GPS satellite 12a and the like which can be observed at the current time, and receives the signal S 1 and the like from the GPS satellite 12a and the like which can be observed. In this case, the last determined position is u sed as the self-position (reference).

As shown in FIG. 3, the terminal 20 stores a positioning program 114 in the first storage section 110. The positioning program 114 is a program for causing the control section 100 to calculate the current determined position P1 based on the signal S1 and the like received by the GPS section 102. The determined position P1 exemplifies the current position. The positioning program 114 and the control section 100 exemplify a determined position calculation section.

In more detail, the control section 100 receives the signal S 1 and the like from three or more GPS satellites 12a and the like, and calculates the pseudo-range, which is the distance between each GPS satellite 12a and the like and the terminal 20, from the delay time which is the difference between the time at which the signal S 1 and the like are transmitted from each GPS satellite 12a md the like and the time at which the signal S1 and the like reach the terminal 20. The control section 100 calculates (locates) the current position using the ephemeris 152b of each GPS satellite 12a and the like and the pseudo-range.

The control section 100 stores the current determined position P1 in a buffer Buff1 of the second storage section 150.

The control section 100 stores a current positioning time t1, which is the time at which the determined position P1 is calculated based on the positioning program 114, in a buffer Buff2 of the second storage section 150.

After outputting an average position Q1 described later or the determined position P 1 (hereinafter called "after position output"), the control section 100 stores the current determined position P 1 in a buffer Buff4 of the second storage section 150 as the last determined position P0. The control section 100 stores the current positioning time t1 in a buffer Buff5 of the second storage section 150 as the last positioning time t0 after position output. There may be a case where positioning calculations are not completed due to the weakness of the signal S1 or the like, whereby the current determined position P1 is not calculated. In this case, the control section 100 stores data indicating the absence of the determined position in the buffer Buff4 after position output.

The positioning program 114 is also a program for causing the control section 100 to calculate the moving velocity of he terminal 20 based on the signal S 1 and the like. Specifically, the positioning program 114 and the control section 100 also exemplify a velocity calculation section. In more detail, the control section 100 calculates the relative velocities of each GPS satellite 12a and the like and the terminal 20 based on the Doppler shift and the like of the signal S1 and the like from the GPS satellite 12a and the like, and calculates a current velocity v1 which is the moving velocity of the terminal 20 (see paragraphs [0016] to [0018] of JP-A-8-68651, for example).

The control section 100 stores the current velocity v1 in a buffer Buff3 of the second storage section 150.

The control section 100 stores the current velocity v1 in a buffer Buff6 of the second storage section 150 as the last velocity v0 after position output.

As shown in FIG. 3, the terminal 20 stores a last determined position presence determination program 116 in the firs storage section 110. The last determined position presence determination program 116 is a program for causing the control section 100 to determine whether or not the determined position P0 is stored in the buffer Buff4.

As shown in FIG 3, the terminal 20 stores an elapsed time evaluation program 118 in the first storage section 110. The elapsed time evaluation program 118 is a program for causing the control section 100 to determine whether or not the time elapsed from the last positioning is with: n 60 seconds (s). A time range within 60 seconds (s) exemplifies an allowable time range specified in advance. The elapsed time evaluation program 118 and the control section 100 exemplify an elapsed time evaluation section.

Specifically, the control section 100 measures the time elapsed from the last positioning time t0 stored in the buffer Bu f5 using the clock section 104. The control section 100 determines whether or not the clapsed time is within 60 seconds (s).

As shown in FIG. 3, the terminal 20 stores a velocity evaluation program 120 in the first storage section 110. The velocity evaluation program 120 is a program for causing the control section 100 to determir e whether or not the last velocity v0 is within 2 meters per second (m/s). A velocity range within 2 meters per second (m/s) exemplifies a first velocity allowable range specified in advance. The velocity evaluation program 120 and the control section 100 exemplify a last velocity evaluation section.

The velocity evaluation program 120 is also a program for causing the control section 100 to determine whether or not the current velocity v1 is within 2 meters per second (m/s). A velocity range within 2 meters per second (m/s) exemplifies a second velocity allowable range specified in advance. The velocity evaluation program 120 and the control section 100 also exemplify a current velocity evaluation section.

As shown in FIG. 3, the termina 20 stores a stationary state determination program 122 in the first storage section 110. The stationary state determination program 122 is a program for causing the control section 100 to determine whether or not a stationary state condition beta is satisfied. The stationary state condition beta exemplifies a stationary state condition. The stationary state determination program 122 and the control section 100 exemplify a stationary state determination section.

The stationary state condition beta is a condition for determining that the terminal 20 is in a stationary state. In more detail, the stationary state condition is a state in which the time elapsed from the last positioning is within 60 seconds (s), the last velocity v0 is within 2 m/s, and the curre it velocity v1 is within 2 m/s.

The inventors of the invention have found that the moving velocity of the terminal 20 measured based on the signal S1 and the like may be 2 m/s or less even if the terminal 20 is in a stationary state. Therefore, a last velocity v0 within 2 m/s and a current velocity v1 within 2 m/s are employed as the elements of the stationary state condition beta. The inventors have also found that the terminal 20 as a car navigation system is likely moving when the time elapsed from the last positioning exceeds 60 seconds (s) from an empirical rule. Therefore, the inventors have added a time elapsed from the last positioning within 60 seconds (s) as the element of the stationary state condition beta in addition to a last velocity v0 within 2 m/s and a current velocity v1 within 2 m/s.

As shown in FIG. 3, the terminal 20 stores an average position calculation program 124 in the first storage section 110. The average position calculation program 124 is a program for causing the control section 100 to calculate the average position Q1 by averaging the last determined pos: tion P0 and the current determined position P1 when the stationary state condition beta is satisfied. The average position Q1 exemplifies an average position. The average position calculation program 124 and the control section 100 exemplify an average position calculation section.

FIG. 4 is a view illustrative of the average position calculation program 124.

As shown in FIG. 4, the control section 100 calculates the last determined position P0, the current determined position P1, and the average position Q1 which is the intermediate position with respect to the latitude, the longitude, and the altitude.

Since the terminal 20 stands still, the determined position P0 and the determined position P1 are positions indicated by the coordinates near the true position r1. This means that the true position r1 exists near the determined position P0 and the determined position P1. Therefore, it is likely that the average position Q1 of the determined position P0 and the determined position P1 exists near the true position r1.

As shown in FIG. 3, the terminal 20 stores a position output program 126 in the first storage section 110. The position output program 126 is a program for causing the control section 100 to output either the average position Q1 or the determined position P1. The position output program 126 and the control section 100 exemplify a position output section.

In more detail, the control section 100 displays the average position Q1 on the display device 34 (see FIG. 2) when the s ationary state condition beta is satisfied.

On the other hand, the control se ction 100 displays the determined position P 1 on the display device 34 when the stationary state condition beta is not satisfied.

As shown in FIG. 3, the terminal 20 stores a reference information update program 128 in the first storage section 110. The reference information update program 128 is a program for causing the control section 100 to store the current determined position P1 in the buffer Buff4 as the determined position P0, store the current positioning time t1 in the buffer 3uff5 as the last positioning time t0, and store the current velocity v1 in the buffer Buffer as the last velocity v0.

As shown in FIG. 3, the terminal 20 stores a positioning count evaluation program 130 in the first storage section 110. The positioning count evaluation program 130 is a program for causing the control section 100 to determine whether or not positioning has been performed gamma times which is the number of times specified in advance. The gamma times exemplifies the number of times specified in advance. The gamma times is 10, for example. The terminal 20 locates the position 10 times within one second (s), and calcu ates the determined position P110 times.

When the control section 100 has determined that positioning has been performed gamma times, the control section 100 finishes the positioning operation.

The terminal 20 is configured as described above.

The terminal 20 calculates the average position Q1 when the stationary state condition beta is satisfied, as described above. Specifically, the terminal 20 does not average (correct) the expected position estimated from the last determined position P0 and the last velocity vector and the current determined position P1. The terminal 20 averages the last determined position P0 and the current determined position P1 when the stationary state condition beta is s itisfied. Therefore, the accuracy of the last velocity vector does not affect the correction of the current determined position P1.

When the terminal 20 stands still, the last determined position P0 and the current determined position P1 are indicated by the coordinates near the true position r1 (see FIG. 4). This means that the true position r1 exists near the last determined position P0 and the current determined position P1. Therefore, the output position (average position Q1) becomes close to the true position in comparison with the case of outputting the position obtained by averaging the expected position and the current determined position P1 by averaging the last determined position P0 and the current determined position P1 and outputting the average position Q1.

This improves the accuracy of the output position (average position Q1) during a stationary state.

The terminal 20 outputs the current determined position P1 when the stationary state condition beta is not satisfied. Specifically, the terminal 20 does not correct the current determined position P1 using the last determined position P0 or the like.

Therefore, the position which reflects the actual moving state can be output when the terminal 20 is moving. Specifically, the terminal 20 can improve the followability during movement.

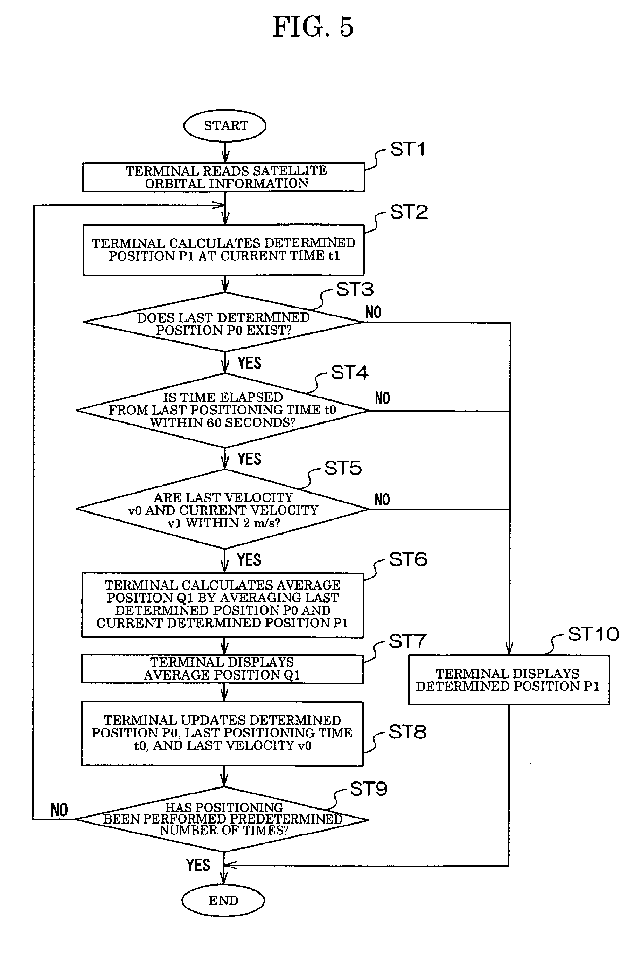

The configuration of the terminal 20 according to this embodiment has been described above. An operation example of the terminal 20 is described below mainly using FIG. 5.

FIG. 5 is a schematic flowchart showing an operation example of the terminal 20 according to this embodiment.

The terminal 20 reads the satellite orbital information 152 (step ST1 in FIG. 5).

The terminal 20 calculates the determined position P1 at the current time t1 (step ST2). The step ST2 exemplifies a determined position calculation step.

The terminal 20 determines whether or not the last determined position P0 exists (step ST3).

When the terminal 20 has determined that the last determined position P0 exists in the step ST3, the terminal 20 determines whether or not the time elapsed from the last positioning time t0 is within 60 seconds (s) (step ST4). The step ST4 exemplifies an elapsed time evaluation step.

When the terminal 20 has determined that the time elapsed from the last positioning time t0 is within 60 seconds in the step ST4, the terminal 20 determines whether or not the last velocity v0 and the current velocity v1 are within 2 m/s (step ST5). The step ST5 exemplifies a last velocity evaluation step and also exemplifies a current velocity evaluation step.

When the terminal 20 has determined that the last velocity v0 and the current velocity v1 are within 2 m/s in the step ST5, the terminal 20 calculates the average position Q1 by averaging the last determined position P0 and the current determined position P1 (step ST6). The step ST6 exemplifies an average position calculation step.

The terminal 20 displays the average position Q1 (step ST7). The step ST7 exemplifies a position output step.

The terminal 20 updates the determined position P0, the last positioning time t0, and the last velocity v0 (step ST8). Specifically, the terminal 20 stores the current determined position P1 in the buffer Bufl4 as the last determined position P0, stores the current positioning time t1 in the buffer Buff5 as the last positioning time t0, and stores the current velocity v1 in the buffer Buffer as the last velocity v0.

The terminal 20 determines whether or not positioning has been performed gamma times which is the predetermined number of times (step ST9). When the terminal 20 has determined that positioning has not been performed gamma times in the step ST9, the terminal 20 returns to the step ST2.

When the terminal 20 has determined that the last determined position P0 does not exist in the step ST3, the terminal 20 displays the determined position P1 (step ST10).

When the terminal 20 has determined that the time elapsed from the last positioning time t0 is not within 60 seconds in the step ST4, the terminal 20 also displays the determined position P1 (step ST10).

When the terminal 20 has determined that the last velocity v0 and the current velocity v1 are not within 2 m/s in the step ST5, the terminal 20 also displays the determined position P1 (step ST10).

The accuracy of the output position (average position Q1) during a stationary state can be improved by the above steps

Moreover, the position which reflects the actual moving state can be output when the terminal 20 does not stand still. Specifically, the terminal 20 can improve the followability during movement.

### (Program, computer-readable recording medium, and the like)

A program for controlling a positioning device may be provided which causes a computer to execute the determined position calculation step, the elapsed time evaluation step, the last velocity evaluation step, the current velocity evaluation step, the average position calculation step, the position output step, and the like of the above-described operation example.

A computer-readable recording medium having such a program for controlling a positioning device recorded thereon and the like may also be provided.

A program storage medium used to install the program for controlling a positioning device and the like in a computer to allow the program and the like to be executable by the computer may be implemented by a packaging medium such as a flexible disk such as a floppy disk (registered trademark), a compact disc read only memory (CD-ROM), a compact disc-recordable (CD-R), a compact disc-rewritable (CD-RW), or a digital versatile disc (DVD), a semiconductor memory, a magnetic disk, or a magneto-optical disk (MO) in which the program is stored temporary or permanently, or the like.

Although only some embodiments of the invention have been described above in detail, those skilled in the art would readily appreciate that many modifications are possible in the embodiments without materially departing from the novel teachings and advantages of the invention. Accordingly, such modifications are intended to be included within the scope of the invention.

## Claims

1. A positioning device which locates a position based on a satellite signal which is a signal from a positioning satellite, the positioning device comprising:
a determined position calculation section which calculates a determined position of the positioning device based on the sate lite signal;
a velocity calculation section which calculates moving velocity of the positioning device based on the satellite signal;
an elapsed time evaluation section which determines whether or not time elapsed from last positioning is within an allowable time range specified in advance;
a last velocity evaluation section which determines whether or not moving velocity during the last positioning is with n a first velocity allowable range specified in advance;
a current velocity evaluation section which determines whether or not current moving velocity is within a second velocit allowable range specified in advance;
a stationary state determination; section which determines whether or not a stationary state condition is satisfied in which the time elapsed from the last positioning is within the allowable time range, the moving velocity during the last positioning is within the first velocity allowable range, and the current moving velocity is within the second velocity allowable range;
an average position calculation section which calculates an average position by averaging the determined position during the last positioning and the current determined position when the stationary state determination section has determined that the stationary state condition is satisfied; and
a position output section which outputs the average position.

2. The positioning device as defined in claim 1, wherein the position output section outputs the current determined position when the stationary state determination section has determined that the stationary state condition is not satisfied.

3. A method of controlling a positioning device comprising:
a determined position calculation step of causing the positioning device to calculate a determined position of the positioning device based on a satellite signal which is a signal from a positioning satellite;
an elapsed time evaluation step of causing the positioning device to determine whether or not time elapsed from last positioning is within an allowable time range specified in advance;
a last velocity evaluation step of causing the positioning device to determine whether or not moving velocity during the last positioning is within a first velocity allowable range specified in advance;
a current velocity evaluation step of causing the positioning device to determine whether or not current moving velocity is within a second velocity allowable range specified in advance;
an average position calculation step of causing the positioning device to calculate an average position by averaging the determined position during the last positioning and the current determined position when the positioning device has determined that the time elapsed from the last positioning is within the allowable time range, the moving velocity during the last positioning is within the first velocity allowable range, and the current moving, velocity is within the second velocity allowable range; and
a position output step of causing the positioning device to output the average position.

4. A program for controlling a position ing device, the program causing a computer to execute:
a determined position calculation step of causing the positioning device to calculate a determined position of the positioning device based on a satellite signal which is a signal from a positioning satellite;
an elapsed time evaluation step of causing the positioning device to determine whether or not time elapsed from last positioning is within an allowable time range specified in advance;
a last velocity evaluation step of causing the positioning device to determine whether or not moving velocity during the last positioning is within a first velocity allowable range specified in advance;
a current velocity evaluation step of causing the positioning device to determine whether or not current moving velocity is within a second velocity allowable range specified in advance;
an average position calculation step of causing the positioning device to calculate an average position by avera ging the determined position during the last positioning and the current determine position when the positioning device has determined that the time elapsed from the last positioning is within the allowable time range, the moving velocity during the last positioning is within the first velocity allowable range, and the current moving velocity is within the second velocity allowable range; and
a position output step of causing the positioning device to output the average position.

5. A computer-readable recording medium having a program for controlling a positioning device recorded thereon, the program causing a computer to execute:
a determined position calculatic n step of causing the positioning device to calculate a determined position of the positioning device based on a satellite signal which is a signal from a positioning satellite;
an elapsed time evaluation step of causing the positioning device to determine whether or not time elapsed from last positioning is within an allowable time range specified in advance;
a last velocity evaluation step of causing the positioning device to determine whether or not moving velocity during the last positioning is within a first velocity allowable range specified in advance;
a current velocity evaluation step of causing the positioning device to determine whether or not current moving velocity is within a second velocity allowable range specified in advance;
an average position calculation step of causing the positioning device to calculate an average position by averaging the determined position during the last positioning and the current determined position when the positioning device has determined that the time elapsed from the last positioning is within the allowable time range, the moving velocity during the last positioning is within the first velocity allowable range, and the current moving velocity is within the second velocity allowable range; and
a position output step of causing the positioning device to output the average position.
